# EUROPÄISCHE PATENTSCHRIFT

(11) **EP 3 482 982 B1**
(45) Veröffentlichungstag und Bekanntmachung des Hinweises auf die Patenterteilung: **20.05.2020**
(21) Anmeldenummer: 18203712.7
(22) Anmeldetag: 31.10.2018
(51) Int. Cl.: B60J 7/12

(54) **DACHSPRIEGEL FÜR EIN KRAFTFAHRZEUG MIT EINEM FALTVERDECK SOWIE VERFAHREN ZUR HERSTELLUNG EINES DACHSPRIEGELS**
ROOF ARCH FOR A MOTOR VEHICLE WITH A FOLDING ROOF AND METHOD FOR PRODUCING A ROOF ARCH
ARCEAU POUR UN VÉHICULE AUTOMOBILE DOTÉ D'UN TOIT DÉCAPOTABLE AINSI QUE PROCÉDÉ DE FABRICATION D'UN ARCEAU

(30) Priorität: 10.11.2017 DE 102017220055
(43) Veröffentlichungstag der Anmeldung: 15.05.2019
(73) Patentinhaber: Magna Car Top Systems GmbH, 74321 Bietigheim-Bissingen (DE)
(72) Erfinder: KAILASAPATHI, Shankar, 70563 Stuttgart (DE); SCHUMACHER, Thorsten, 25495 Kummerfeld (DE)
(74) Vertreter: Völger, Silke Beatrix

(56) Entgegenhaltungen:
- EP-B1- 2 719 563
- WO-A1-2005/039908
- WO-A2-2005/084291

## Beschreibung

Die vorliegende Erfindung betrifft einen Dachspriegel für ein Kraftfahrzeug mit einem Faltverdeck, wobei der Dachspriegel mit dem Faltverdeck, welches zwischen einer Schließstellung und einer Offenstellung bewegbar ist, verbindbar ist, wobei der Dachspriegel in Einbaulage quer zur Fahrtrichtung des Fahrzeugs verläuft. Die Erfindung betrifft weiterhin ein Verfahren zur Herstellung des Dachspriegels.

Dachspriegel für ein Kraftfahrzeug mit einem Faltverdeck sind aus der EP 2 719 563 B1 bekannt, wobei die Dachspriegel ein erstes als Hohlprofil aus einem Leichtmetall ausgeführtes Bauteil und zwei zweite Bauteile aus Stahl aufweisen. Das erste Bauteil weist hierbei eine Geometrie auf, die dem Faltverdeck einen Formenverlauf gibt, welcher quer zur Fahrtrichtung des Fahrzeugs im Wesentlichen bombiert ist. Die zweiten Bauteile sind als Lenker zur Anbindung an die Karosserie ausgeführt und sind mit einem Kunststoff umspritzt. Da sich das zweite Bauteil des Dachspriegels im verbauten Zustand im Bereich des Kopfaufschlags für Passagiere befindet, ist es zum Schutz vor möglichen Kopfverletzungen in Folge eines Unfalls erforderlich, entsprechende Radien vorzusehen. Diese Radien werden als Kopfaufprallradien bezeichnet und müssen bei der Umspritzung im Bereich des als Lenkers ausgeführten zweiten Bauteils entsprechend berücksichtigt werden. Bei der Montage der Dachspriegel werden die Umspritzungsbereiche der zweiten Bauteile in das Hohlprofil des ersten Bauteils eingesteckt und in einem weiteren Schritt werden die Bauteile durch Verpressen dauerhaft miteinander verbunden.

Mehrteilige Dachspriegel, die einen Mittenbereich aus einem ersten Material und seitliche Beschläge aus einem biegefesteren anderen Material aufweisen, sind weiterhin aus der WO 2005/039908 A1 bekannt. Die Beschläge halten dabei die Dachspriegel an den Rahmenteilen des Faltverdecks und sind über Befestigungsmittel, die bei geschlossenem Faltverdeck annähernd parallel zur Erstreckungsebene des äußeren Dachbezugs im Bereich des Dachspriegels liegen, mit den Dachspriegeln verbunden.

Es ist eine Aufgabe der Erfindung, einen Dachspriegel zu verbessern, so dass bei der Fertigung einerseits Kosten reduziert werden und andererseits Zeit eingespart werden kann, wobei der hergestellte Dachspriegel einen geringen Bauraum in der Ablageposition des Faltverdecks benötigt und ein geringes Gewicht aufweist und zwischen den Bauteilen des Dachspriegels eine sichere Verbindung besteht.

Die Lösung der Aufgabe erfolgt durch einen Dachspriegel für ein Kraftfahrzeug mit einem Faltverdeck, wobei der Dachspriegel mit dem Faltdach, welches zwischen einer Schließstellung und einer Offenstellung bewegbar ist, verbindbar ist, wobei der Dachspriegel in Einbaulage quer zur Fahrtrichtung des Fahrzeugs verläuft, wobei der Dachspriegel aus einem ersten Bauteil, welches in Einbaulage im Wesentlichen quer zur Fahrtrichtung des Fahrzeugs und zwei zweite Bauteilen welche als Lenker ausgebildet sind und zwei dritten Bauteilen welche als Endkappen ausgebildet sind, besteht, wobei das erste Bauteil zumindest aus einem ersten Material besteht und das zweite Bauteil aus einem zweiten und das dritte Bauteil aus einem dritten Material vom ersten und zweiten Bauteil verschiedenen Material besteht, und wobei das erste Bauteil an seiner Unterseite mit Radien zur Erfüllung der Kopfaufschlaggesetzes ausgeführt ist.

Diese Ausführung ermöglicht es, unterschiedliche Materialien, entsprechend der Anforderung und Belastung des Bauteils gezielt zu nutzen und eine erhebliche Gewichtsreduktion bei gleichzeitig hoher Festigkeit zu erreichen.

Unter "verschiedenen Materialen" wird hierbei verstanden, dass die jeweiligen Grundkörper der beiden Bauteile aus verschiedenen Materialien bestehen. Es ist jedoch möglich, dass in die Bauteile eingesetzte weitere Teile, welche beispielsweise eine Funktion bei der Verbindung oder Übertragung von Kräften erfüllen, ein gleiches oder ähnliches Grundmaterial aufweisen, wie das jeweils andere Bauteil.

Erfindungsgemäß umfasst der Dachspriegel ein erstes Bauteil, wobei das erste Bauteil als Hohlprofil ausgeführt ist. Das erste Bauteil kann dann entsprechend einer erforderlichen Länge abgeschnitten werden. Das erste Bauteil weist eine Geometrie auf, dass es einem Faltverdeck einen Formverlauf gibt, welcher quer zur Fahrtrichtung des Fahrzeugs im Wesentlichen bombiert ist. Das erste Bauteil ist aus Leichtmetall, bevorzugt aus Aluminium oder einer Aluminiumlegierung, hergestellt.

Aluminium bietet den Vorteil, dass es wesentlich leichter als Stahl ist, und wird bevorzugt zur Herstellung von Strangpressprofilen eingesetzt, wodurch das erste Bauteil kostengünstig bei niedrigem Gewicht und ausreichender Steifigkeit hergestellt werden kann.

Alternativ zum Strangpressziehen ist es auch denkbar, dass die Herstellung des Hohlprofils durch ein anderes Verfahren, beispielsweise durch Innenhochdruckumformen (IHU) oder durch Rollformen, erfolgt.

Das zweite Bauteil weist einen Stahlgrundkörper auf, welcher ein Biege-Stanzteil ist. Der Stahlgrundkörper ist dabei im Wesentlichen ein Flachstahl, welcher entsprechend den Erfordernissen gefertigt wird. Durch Biege-Stanzen kann das Bauteil in einfacher Weise geometrisch den Anforderungen angepasst werden. Die Geometrie des Bauteils ist dabei so ausgestaltet, dass es die auf das Bauteil wirkenden Kräfte ideal aufnehmen bzw. übertragen kann.

Das zweite Bauteil ist als Lenker ausgeführt, wie es im Stand der Technik für Faltverdecke bekannt ist. Lenker haben die Aufgabe einen Dachspriegel mit der Karosserie zu verbinden und sind ein Teil einer Dachkinematik, welche für das Öffnen und Schließen eines Faltverdecks erforderlich ist. Lenker werden links und rechts eines Dachspriegels angeordnet und sind beispielsweise mit einer weiteren Lenkeranordnung oder mit einer Führungsbahn der Dachkinematik, welche im festen Dachteil des Fahrzeugs angeordnet ist, verbunden.

Da sich der Dachspriegels im verbauten Zustand im Bereich des Kopfaufschlags für Passagiere befindet, ist es erforderlich zum Schutz vor möglichen Kopfverletzungen in Folge eines Unfalls, entsprechende Radien an den Kanten der betroffenen Bauteile vorzusehen. Diese Radien werden als Kopfaufprallradien bezeichnet und müssen nach Gesetzen und Vorschriften (FMVSS 201 und ECE R-21) im Innenraum eines Kraftfahrzeugs zumindest 3mm betragen. Diese Radien sind erfindungsgemäß am ersten Bauteil ausgeführt.

Zwischen den Radien ist eine entsprechende Einsenkung ausgebildet. Im Bereich der Einsenkung wird das zweite Bauteil über einen Abschnitt an das erste Bauteil angelegt und in diesem Bereich mit dem ersten Bauteil dauerhaft verbunden. Des Weiteren wird das dritte Bauteil über einen Verbindungsabschnitt mit dem ersten Bauteil dauerhaft verbunden.

Das dritte Bauteil ist als Dachspriegelendkappe aus einem Kunststoff ausgeführt. Vorteilhafterweise ist das Material des dritten Bauteils ein Elastomer. Durch diese Ausführung ergibt sich der Vorteil, dass sich die Ecken der Spriegelendkappen tangential an den Verdeckbezug schmiegen können und dadurch Abzeichnungen der Dachspriegel von außen am Verdeckbezug vermeiden lassen.

Durch die erfindungsgemäße Ausgestaltung der beschriebenen dauerhaften Verbindung zwischen den Bauteilen ist eine bessere Sicherung des dritten Bauteils am ersten Bauteil möglich.

Die angegebene Ausführung und Anordnung der Bauteile führt zu einem Bauraumvorteil in der Ablageposition des Faltverdecks.

Durch das erfindungsgemäße Verfahren wird eine Einheit gebildet, welche mit der Karosserie eines Kraftfahrzeugs verbunden werden kann. Die Herstellung und Montage der Dachspriegel führt zu einer Kosten- und Zeiteinsparung. Dies ist unter anderem dadurch bedingt, dass die Kopfaufschlagradien an dem ersten Bauteil ausgeführt sind und der Lenker keine zusätzliche Kunststoffumspritzung zur Befestigung am ersten Bauteil benötigt.

Die dauerhafte Verbindung ist vorzugsweise eine Nietverbindung, die eine formschlüssige als auch eine kombinierte form- und kraftschlüssige Verbindung umfassen kann.

Die Erfindung wird nachfolgend anhand eines in den Zeichnungen schematisch dargestellten Ausführungsbeispiels beschrieben.

Es zeigt:
Fig. 1 eine perspektivische Ansicht eines Faltverdecks für ein Kraftfahrzeug in der Schließstellung,
Fig. 2 einen Zusammenbau des erfindungsgemäßen Dachspriegels,
Fig. 3 ein erstes Bauteil des erfindungsgemäßen Dachspriegels in einer Ansicht,
Fig. 4 das erste Bauteil in einem Querschnitt,
Fig. 5 eine perspektivische Ansicht eines zweiten Bauteils eines Dachspriegels,
Fig. 6 eine perspektivische Ansicht eines dritten Bauteils eines Dachspriegels,
Fig. 7 eine perspektivische Ansicht eines Ausschnitts gemäß Detail A in Figur 4; und
Fig. 8 einen Schnitt des Ausschnitts der Figur 7.

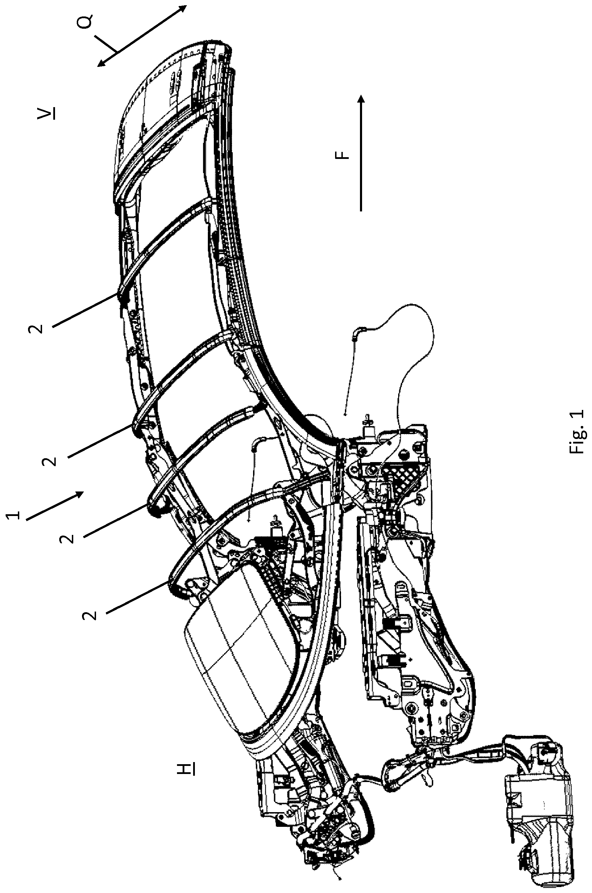

Fig. 1 zeigt in einer perspektivischen Seitenansicht die Verdeckbauteile eines Faltverdecks 1 für ein Cabriolet-Fahrzeug in Schließposition. Die Fahrzeuglängsrichtung bzw. Fahrtrichtung ist mit dem Pfeil F angezeigt. Das Faltverdeck 1 kann zwischen einer einen Fahrgastraum überspannenden Schließstellung in eine zusammengefaltete Ablagestellung bewegt werden. Das Faltverdeck 1 weist einen Verdeckbezug auf, der von den Verdeckbauteilen getragen ist. Der Verdeckbezug wird in Querrichtung Q im Wesentlichen von Dachspriegeln 2 gestützt, der Verdeckbezug ist zeichnerisch in der Figur 1 nicht dargestellt. Das verstellbare Faltverdeck 1 erstreckt sich ausgehend von einem auf der Vorderseite V angeordneten nicht dargestellten Windschutzscheibenrahmen in einen Heckbereich H des Fahrzeugs. Das Faltverdeck 1 ist bezogen auf eine Mittelachse A symmetrisch aufgebaut.

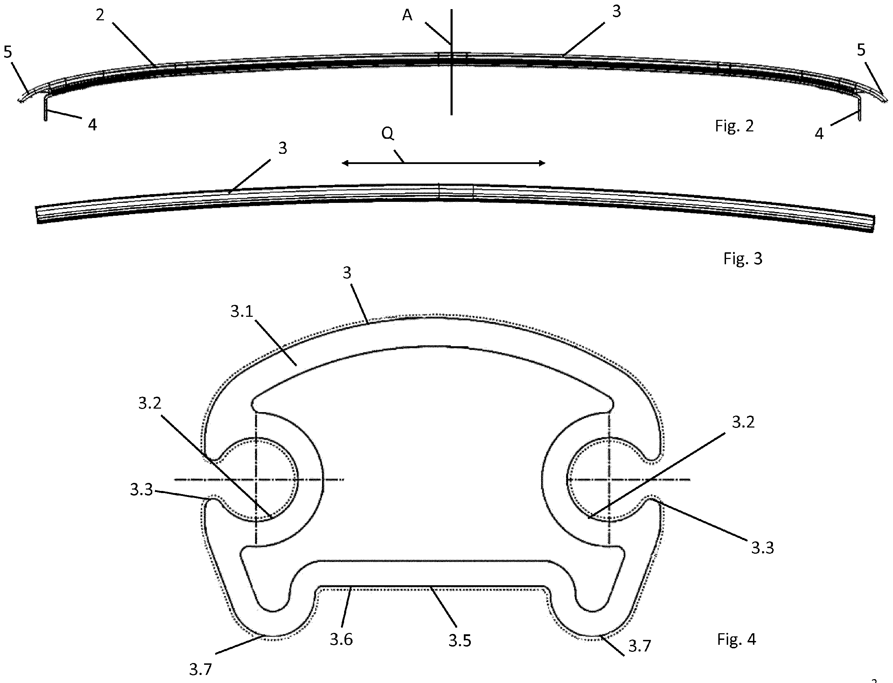

In Fig. 2 ist ein erfindungsgemäßer Dachspriegel 2 dargestellt, welcher im Wesentlichen aus einem ersten Bauteil 3, zwei zweiten Bauteilen 4 und zwei dritten Bauteilen 5 besteht, welche dauerhaft miteinander verbunden sind. Die Dachspriegel 2 des Faltverdecks 1 sind in Bezug auf die Mittelachse A symmetrisch aufgebaut, wobei jeweils an endseitig ausgebildeten Abschnitten an dem ersten Bauteil 3 ein zweites und ein drittes Bauteil 4, 5 angeordnet und befestigt sind. Der Zusammenbau und die entsprechende Befestigung werden zu den weiteren Figuren beschrieben.

In Fig. 3 wird das erste Bauteil 3 dargestellt, welches im Wesentlichen ein Hohlprofil 3.1 ist, das durch Strangpressziehen hergestellt wird. Das Hohlprofil 3.1 wird aus Leichtmetall, bevorzugt Aluminium oder eine Aluminiumlegierung, hergestellt. Ein Beispiel eines möglichen Materials ist ein Aluminiumwerkstoff mit der Bezeichnung EN AW-6060 T6. Das erste Bauteil 3 weist eine Geometrie auf, dass es einem Faltverdeck einen Formverlauf gibt, welcher quer zur Fahrtrichtung des Fahrzeugs im Wesentlichen bombiert ist.

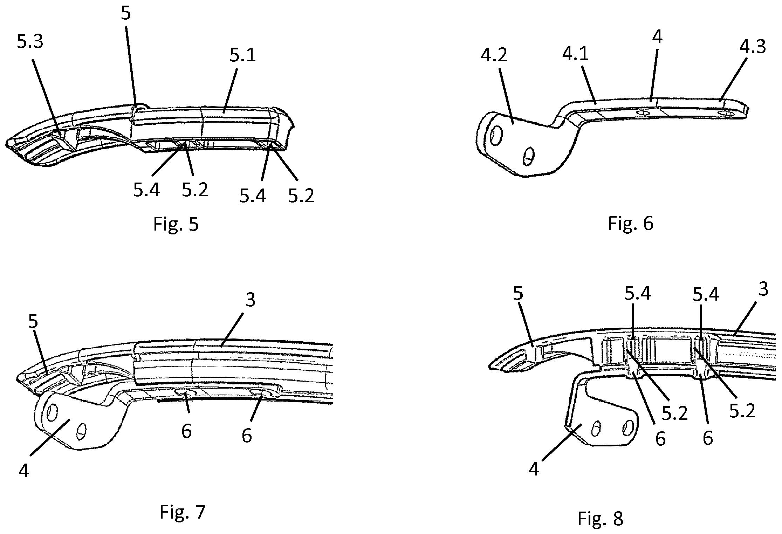

Das erste Bauteil 3 ist in der Figur 4 in einem Querschnitt dargestellt. Aus dieser Darstellung kann man erkennen, dass das erste Bauteil 3 beidseits in Querrichtung Q verlaufende Kanäle 3.2 zum Einführen von Anbindungselementen für den Verdeckstoff aufweist. Diese Kanäle 3.2 weisen jeweils einen Schlitz 3.3 und einen kreisförmigen Querschnitt 3.4 auf. Auf der Unterseite 3.5 des ersten Bauteils 3 ist eine in Querrichtung verlaufende Einsenkung 3.6 ausgebildet, die randseitig von Radien 3.7 begrenzt wird. Die Einsenkung 3.6 dient bei der Montage des Dachspriegels zur Anbindung des zweiten Bauteils 4. Die an den Randbereichen ausgebildeten Radien 3.7 bilden die Kopfaufprallradien zur Erfüllung der gesetzlichen Anforderungen des Kopfaufsch laggesetzes.

Fig. 6 zeigt einen Stahlgrundkörper 4.1 des zweiten Bauteils 4. Der Stahlgrundkörper 4.1 ist ein Biege-Stanzteil, und weist annähernd eine L-Form, welche zwei plattenförmige Elemente 4.2, 4.3 umfasst, auf. Dabei sind in dem einen plattenförmigen Element 4.3, welches mit dem ersten Bauteil 3 und dem dritten Bauteil 5 verbunden werden kann, zumindest zwei Durchgangsbohrungen 4.4 vorgesehen, welche ein dauerhaftes Verbinden des ersten Bauteils 3 mit dem zweiten und dritten Bauteil 4 erlaubt. Das zweite Bauteil ist als Lenker für Faltverdecke ausgeführt und stellt die Anbindung des Dachspriegels 2 mit der Karosserie als Teil der Dachkinematik dar.

In der Figur 5 ist das dritte Bauteil 5 in einer perspektivischen Darstellung gezeigt. Das dritte Bauteil 5 ist aus einem Kunststoff als Spritzgussteil hergestellt und umfasst zwei Bereiche. Der erste Bereich 5.1 ist als Verbindungsabschnitt mit Befestigungsrippen 5.2 ausgeführt und ist hinsichtlich seines Querschnittes an den Querschnitt des Hohlprofils 3.1 angepasst. Zwischen den Befestigungsrippen 5.2 verbleibt jeweils ein Hohlraum 5.4. Bei der Montage wird das dritte Bauteil 5 mit dem ersten Bereich 5.1 in das Hohlprofil 3.1 des ersten Bauteils eingesteckt. Im montierten Zustand ragt das dritte Bauteil 5 mit seinem zweiten Bereich 5.3 aus dem ersten Bauteil 1 heraus. Hierbei ist der Verlauf und die Wölbung des zweiten Bereichs 5.3 dem ersten Bauteil 1 angepasst, so dass das dritte Bauteil 5 eine Kunststoff Endkappe für den Dachspriegel 1 bildet, wobei sich die Endkappe zur Außenseite des Dachspriegels 1 hin in seinem Querschnitt verjüngt.

Die Figuren 7 und 8 zeigen einen Endbereich des Dachspriegels im montierten Zustand, wobei das erste, zweite und dritte Bauteil über eine Nietverbindung 6 dauerhaft miteinander verbunden sind. Bei der Montage des Dachspriegels 2 wird jeweils beidseits an den Endbereichen ein drittes Bauteil 5 und ein zweites Bauteil 4 wie nachfolgend beschrieben befestigt. Die nachfolgende Beschreibung bezieht sich allerdings nur auf die Montage an einem Endbereich, wobei die Montage an dem zweiten Endbereich gleichermaßen erfolgt.

Zur Montage des Dachspriegels 2 wird in einem ersten Schritt das dritte Bauteil 5 mittels des ersten Bereichs 5.1 in das Hohlprofil 3.1 des Dachspriegels 2 eingesteckt. Des Weiteren wird das zweite Bauteil 4 mittels des plattenförmigen Elementes 4.3 in die Einsenkung 3.6 gelegt, wobei die Durchgangsbohrungen 4.4 des zweiten Bauteils mit den Hohlräumen 5.4 zwischen den Befestigungsrippen 5.2 fluchten. In einem abschließenden Montageschritt werden das erste, das zweite und das dritte Bauteil 3, 4, 5 mit Blindnieten 6 zusammengenietet. Durch die Vernietung ist das zweite Bauteil am ersten Bauteil fixiert. Des Weiteren ist das dritte Bauteil 5 im Bereich der Befestigungsrippen am ersten Bauteil 3 fixiert.

## Patentansprüche

1. Dachspriegel (2) für ein Kraftfahrzeug mit einem Faltverdeck (1), wobei der Dachspriegel (2) mit dem Faltverdeck (1), welches zwischen einer Schließstellung und einer Offenstellung bewegbar ist, verbindbar ist, wobei der Dachspriegel (2) in Einbaulage quer zur Fahrtrichtung des Fahrzeugs verläuft, und wobei der Dachspriegel aus einem ersten Bauteil (3), welches in Einbaulage im Wesentlichen quer zur Fahrtrichtung des Fahrzeugs verläuft und zwei zweiten Bauteilen (4) welche als Lenker ausgebildet sind, besteht, wobei das erste Bauteil (3) im Wesentlichen ein Hohlprofil (3.1) aus Leichtmetall ist, und das zweite Bauteil (4) aus einem zweiten, vom ersten Bauteil (3) verschiedenen Material besteht, und wobei die beiden Bauteile dauerhaft miteinander verbunden sind, und wobei der Dachspriegel (2) aus zwei dritten Bauteile (5), welche als Endkappen ausgeführt sind, besteht, wobei das dritte Bauteil (5) aus einem von dem zweiten Bauteil (3) verschiedenen Material besteht, und wobei Radien zur Erfüllung des Kopfaufschlaggesetztes ausgeführt sind, und wobei das ersten, das zweite und das dritte Bauteil (3, 4, 5) über eine formschlüssige oder eine kombinierte form- und kraftschlüssige Verbindung miteinander dauerhaft verbunden sind, **dadurch gekennzeichnet, dass** an dem ersten Bauteil (3) die Radien zur Erfüllung des Kopfaufschlaggesetztes ausgeführt sind, und dass das zweite Bauteil (4) mittels eines plattenförmigen Elementes (4.3) in einer Einsenkung (3.6) zwischen Radien (3.7) an der Unterseite des ersten Bauteils verbunden und das dritte Bauteil (5) mit einem ersten Bereich (5.1) endseitig in das Hohlprofil (3.1) des ersten Bauteils (3) gefügt und mit diesem über den ersten Bereich (5.1) verbunden ist..

2. Dachspriegel (2) nach Anspruch 1, **dadurch gekennzeichnet, dass** das erste Bauteil (3) beidseits in Querrichtung Q verlaufende Kanäle (3.2) umfassen, die einen Schlitz zum Einführen von Anbindungselementen für einen Verdeckstoff aufweisen.

3. Dachspriegel (2) nach Anspruch 1, **dadurch gekennzeichnet, dass** das zweite Bauteil (4) einen Stahlgrundkörper (4.1) aufweist, der annähernd eine L-Form hat.

4. Dachspriegel (2) nach Anspruch 1, **dadurch gekennzeichnet, dass** das dritte Bauteil (5) aus einem Kunststoff, vorzugsweise einem Elastomer, hergestellt ist und zwei Bereiche umfasst, wobei der erste Bereich (5.1) als Verbindungsabschnitt mit Befestigungsrippen (5.2) ausgeführt ist

5. Dachspriegel (2) nach einem der vorangehenden Ansprüche, **dadurch gekennzeichnet, dass** das erste, zweite und dritte Bauteil (3, 4, 5) über eine Nietverbindung (6) dauerhaft miteinander verbunden sind.

6. Verfahren zur Herstellung eines Dachspriegels (2) nach Anspruch 1, mit den Schritten:
a. Bereitstellen eines ersten Bauteils (3) welches ein Hohlprofil (3.1) und Kopfaufprallradien (3.7) aufweist, zwei zweiten Bauteils (4) welche ein plattenförmiges Element umfassen, und zwei dritten Bauteilen (5) welche zumindest einen als Verbindungsabschnitt ausgebildeten ersten Bereich (5.1) aufweisen
b. Einfügen der dritten Bauteile (5) mittels des ersten Bereichs (5.1) in die endseitig ausgebildeten Abschnitte des Hohlprofils (2.1) des ersten Bauteils (3)
c. Anlegen der zweiten Bauteile (4) mittels des plattenförmigen Elementes (4.3) in eine Einsenkung (3.6) zwischen die Radien (3.7) im Bereich der endseitig ausgebildeten Abschnitte
d. Dauerhaftes Verbinden im Bereich beider endseitiger Abschnitte des ersten Bauteils(3) mit dem zweiten und dritten Bauteil (4, 5) derart, dass das zweite Bauteil (4) über das plattenförmige Element am ersten Bauteil (3) befestigt und das dritte Bauteil (5) über den Verbindungsabschnitt (5.1) am ersten Bauteil (3) befestigt ist.

7. Verfahren zur Herstellung eines Dachspriegels (2) nach Anspruch 6, **dadurch gekennzeichnet, dass** die dauerhafte Verbindung des Schrittes d) eine Nietverbindung (6) ist.

## Claims

1. Roof arch (2) for a motor vehicle with a folding roof (1), wherein the roof arch (2) is connectable to the folding roof (1), which is movable between a closed position and an open position, wherein the roof arch (2), in the installed position, runs transversely with respect to the direction of travel of the vehicle, and wherein the roof arch consists of a first component (3) which, in the installed position, substantially transversely with respect to the direction of travel of the vehicle, and two second components (4) which are designed as links, wherein the first component (3) is substantially a hollow profile (3.1) made of light metal and the second component (4) is composed of a second material different from the first component (3), and wherein the two components are permanently connected to each other, and wherein the roof arch (2) consists of two third components (5) which are designed as end caps, wherein the third component (5) is composed of a material different from the second component (3), and wherein radii for complying with the law on head impacts are formed, and wherein the first, the second and the third component (3, 4, 5) are permanently connected to one another via a form-fitting connection or a combined form-fitting and force-fitting connection, **characterized in that** the radii for complying with the law on head impacts are formed on the first component (3), and **in that** the second component (4) is connected by means of a plate-like element (4.3) in a hollow (3.6) between radii (3.7) on the underside of the first component, and the third component (5) is joined on the end side with a first region (5.1) into the hollow profile (3.1) of the first component (3) and is connected thereto via the first region (5.1).

2. Roof arch (2) according to Claim 1, **characterized in that** the first component (3) comprises channels (3.2) which run on both sides in the transverse direction (Q) and have a slot for the introduction of attachment elements for a roof material.

3. Roof arch (2) according to Claim 1, **characterized in that** the second component (4) has a steel main body (4.1) which is approximately L-shaped.

4. Roof arch (2) according to Claim 1, **characterized in that** the third component (5) is produced from a plastic, preferably an elastomer, and comprises two regions, wherein the first region (5.1) is designed as a connecting section with fastening ribs (5.2).

5. Roof arch (2) according to one of the preceding claims, **characterized in that** the first, second and third component (3, 4, 5) are permanently connected to one another via a rivet connection (6).

6. Method for producing a roof arch (2) according to Claim 1, with the following steps:
a. providing a first component (3) which has a hollow profile (3.1) and head impact radii (3.7), two second components (4) which comprise a plate-like element, and two third components (5) which have at least one first region (5.1) designed as a connecting section,
b. joining the third components (5) by means of the first region (5.1) into the portions formed on the end side of the hollow profile (2.1) of the first component (3),
c. placing the second components (4) by means of the plate-like element (4.3) into a hollow (3.6) between the radii (3.7) in the region of the sections formed on the end side,
d. providing a permanent connection in the region of the two end-side sections of the first component (3) to the second and third components (4, 5) in such a manner that the second component (4) is fastened to the first component (3) via the plate-like element, and the third component (5) is fastened to the first component (3) via the connecting section (5.1).

7. Method for producing a roof arch (2) according to Claim 6, **characterized in that** the permanent connection in step d) is a rivet connection (6).

## Revendications

1. Arceau (2) pour un véhicule automobile doté d'un toit décapotable (1), l'arceau (2) pouvant être connecté au toit décapotable (1) qui peut être déplacé entre une position de fermeture et une position d'ouverture, l'arceau (2), dans la position d'installation, s'étendant transversalement à la direction de conduite du véhicule, et l'arceau se composant d'un premier composant (3) qui dans la position d'installation, essentiellement transversalement à la direction de conduite du véhicule et de deux composants (4) qui sont réalisés sous forme de bras oscillant, le premier composant (3) étant essentiellement un profilé creux (3.1) en métal léger, le deuxième composant (4) se composant d'un deuxième matériau différent du premier composant (3) et les deux composants étant connectés l'un à l'autre de manière permanente, et l'arceau (2) se composant de deux troisièmes composants (5) qui sont réalisés sous forme d'embouts d'extrémité, le troisième composant (5) se composant d'un matériau différent du deuxième composant (3), et des rayons étant réalisés de manière satisfaisant à la loi sur les impacts à la tête, et le premier, le deuxième et le troisième composant (3, 4, 5) étant connectés de manière permanente les uns aux autres par le biais d'une connexion par engagement par correspondance de formes ou par une combinaison d'une connexion par engagement par correspondance de formes et par force, **caractérisé en ce que** les rayons réalisés de manière satisfaisant à la loi sur les impacts à la tête sont réalisés au niveau du premier composant (3) et **en ce que** le deuxième composant (4) est connecté au moyen d'un élément en forme de plaque (4.3) dans un renfoncement (3.6) entre les rayons (3.7) au niveau du côté inférieur du premier composant et le troisième composant (5) est assemblé par une première région (5.1) du côté de l'extrémité dans le profilé creux (3.1) du premier composant (3) et est connecté à celui-ci par le biais de la première région (5.1).

2. Arceau (2) selon la revendication 1, **caractérisé en ce que** le premier composant (3) comprend des canaux (3.2) s'étendant des deux côtés dans la direction transversale Q, lesquelles présentent une fente pour l'introduction d'éléments de liaison pour un revêtement de toit décapotable.

3. Arceau (2) selon la revendication 1, **caractérisé en ce que** le deuxième composant (4) présente un corps de base en acier (4.1) qui présente approximativement une forme en L.

4. Arceau (2) selon la revendication 1, **caractérisé en ce que** le troisième composant (5) est fabriqué en matière plastique, de préférence en élastomère et comprend deux régions, la première région (5.1) étant réalisée sous forme de portion de liaison avec des nervures de fixation (5.2).

5. Arceau (2) selon l'une quelconque des revendications précédentes, **caractérisé en ce que** le premier, le deuxième et le troisième composant (3, 4, 5) sont connectés de manière permanente les uns aux autres par le biais d'une connexion rivetée (6).

6. Procédé de fabrication d'un arceau (2) selon la revendication 1, comprenant les étapes suivantes :
a. fourniture d'un premier composant (3) qui présente un profilé creux (3.1) et des rayons d'impact à la tête (3.7), deux deuxièmes composants (4) qui comprennent un élément en forme de plaque et deux troisièmes composants (5) qui présentent au moins une première région (5.1) réalisée sous forme de portion de liaison,
b. insertion des troisièmes composants (5) au moyen de la première région (5.1) dans les portions du profilé creux (2.1) du premier composant (3) réalisées du côté de l'extrémité,
c. application des deuxièmes composants (4) au moyen de l'élément en forme de plaque (4.3) dans un renfoncement (3.6) entre les rayons (3.7) dans la région des portions réalisées du côté de l'extrémité,
d. connexion permanente dans la région des deux portions du premier composant (3) du côté de l'extrémité au deuxième et au troisième composant (4, 5) de telle sorte que le deuxième composant (4) soit fixé par le biais de l'élément en forme de plaque au premier composant (3) et que le troisième composant (5) soit fixé par le biais de la portion de liaison (5.1) au premier composant (3).

7. Procédé de fabrication d'un arceau (2) selon la revendication 6, **caractérisé en ce que** la liaison permanente de l'étape d) est une liaison rivetée (6).
